# EUROPÄISCHE PATENTSCHRIFT

(11) **EP 1 227 379 B1**
(45) Veröffentlichungstag und Bekanntmachung des Hinweises auf die Patenterteilung: **14.05.2008**
(21) Anmeldenummer: 01101064.2
(22) Anmeldetag: 18.01.2001
(51) Int. Cl.: G05B 19/418

(54) **Verfahren und Vorrichtung zur Steuerung einer Maschine in einem Fertigungssystem**
Method and device for the control of a machine in a fabrication system
Procédé et dispositif pour la commande d'une machine dans un système de fabrication

(43) Veröffentlichungstag der Anmeldung: 31.07.2002
(73) Patentinhaber: Mühlbauer AG, 93426 Roding (DE)
(72) Erfinder: Hochecker, Rainer, D-81377 München (DE); Foerster, Björn, D-81479 München (DE); Henze, Tino, D-93194 Walderbach (DE); Schmidt, Jörg, D-93489 Schorndorf (DE)
(74) Vertreter: Grünecker, Kinkeldey, Stockmair & Schwanhäusser Anwaltssozietät

(56) Entgegenhaltungen:
- WO-A-93/01703
- DE-A- 19 520 745
- DE-A- 19 520 747
- DE-A- 19 617 181
- US-A- 5 689 415

## Beschreibung

Die Erfindung betrifft ein Verfahren und eine Vorrichtung zur Steuerung einer Maschine in einem Fertigungssystem gemäß dem Oberbegriff des Anspruchs 1, sowie ein Verfahren zur Bereitstellung einer flexiblen Steuerung gemäß dem Oberbegriff des Anspruchs 14.

Eine Steuervorrichtung, die eine Maschine in einem Fertigungssystem steuert, darf durch das Steuern die Abläufe in der Maschine nicht verzögern, das Steuern muss also in Echtzeit erfolgen. Einerseits muß die Steuervorrichtung aufgrund von engen Fertigungszeitplänen und hohen Qualitätsanforderungen zuverlässig arbeiten, andererseits soll sie bei sinkenden Kosten wachsenden Anforderungen durch schnellere Maschinen oder komplexere Fertigungssysteme genügen. Neben speicherprogrammierbaren Steuerungen (SPS) werden für diese Anforderungen zunehmend Steuereinheiten mit PCbasierender Technik verwendet, die hier im folgenden auch als PC-SPS bezeichnet werden sollen.

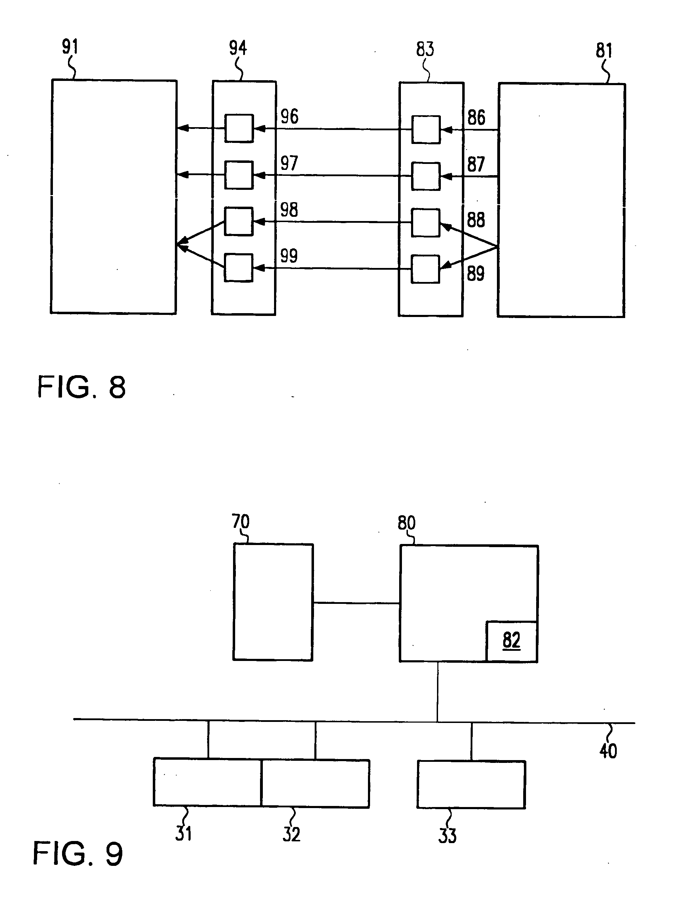

In Fig. 9 ist eine herkömmliche Steuervorrichtung für ein Fertigungssystem mit mehreren Maschinen 31, 32 und 33, die über einen Datenbus 40 mit einer Steuereinheit 80 verbunden sind, dargestellt. Die Steuereinheit 80 umfasst zumindest eine CPU 82 und steuert die Fertigungsabläufe auf den Maschinen 31, 32 und 33 und die Darstellung von relevanten Daten in einer Darstellungseinheit 70, die der Überwachung des Fertigungssystems dienen. Die Steuereinheit 80 und die Darstellungseinheit 70 bilden die Steuervorrichtung, die beispielsweise eine PC-SPS sein kann.

Die CPU 82 der Steuereinheit 80 wird durch die Steuerung der Darstellungseinheit 70 erheblich belastet, wodurch eine verringerte Leistung zur Dieses Problem lässt sich durch eine Darstellungseinheit mit eigener Rechenleistung, beispielsweise einem PC als Darstellungseinheit, lösen. Nachteilig in einer solchen Anordnung ist allerdings, dass der Aufwand zum Bereitstellen der Steuerung steigt, da zwei getrennte Einheiten zu programmieren und ein Datenaustausch zwischen ihnen zu regeln ist. Letzteres wirkt sich besonders nachteilig aus für Steuerungen mit variierenden Aufgabenstellungen und somit unterschiedlichen darzustellenden Daten.

Fig. 8 zeigt für eine herkömmliche Steuervorrichtung mit zwei getrennten Einheiten schematisch eine Darstellungssoftware 91 und eine Steuerungssoftware 81. Die Steuerungssoftware 81 übertragt ihre Ausgangsdaten direkt, oder über eine erste Schnittstelle 83 und entsprechende Zwischenspeicher 86 bis 89, zu der zweiten Schnittstelle 94 mit seinen Zwischenspeichern 96 bis 99. Von den Zwischenspeichern 96 bis 99 der zweiten Schnittstelle 94 werden die Daten zu der Darstellungssoftware 91 übertragen. In beiden Fällen muss das Übertragen durch die Steuerungssoftware 81 gesteuert und überwacht werden. Bei einer Erstellung der Darstellungssoftware 91 und der Steuerungssoftware 81 für verschiedene Aufgabenstellungen des Fertigungssystems müssen für jede Aufgabenstellung die beiden Schnittstelleneinheiten 83, 94 oder zumindest eine Zuordnung der zusammengehörigen Zwischenspeicher 86 bis 89, 96 bis 99 und deren Anbindung an die Steuerungssoftware 81 und die Darstellungssoftware 91 angepasst werden.

Die deutsche Offenlegungsschrift DE 196 17 181 A1 offenbart die Verwendung eines Netzwerkservers in einem System mit einer Vielzahl von programmierbaren logischen Steuerungen (PLS), die über den Netzwerkserver mit der Fertigungsanlagensteuerung verbunden sind. Der Netzwerkserver enthält eine zentrale Steuereinrichtung, einen Datenspeicher sowie Schnittstelleneinrichtungen. Die PLS umfasst eine zentrale Steuereinrichtung, einen Speicher und Schnittstelleneinrichtungen. Dem Netzwerk- oder Datenserver werden dabei unter anderem Daten von einer PLS oder Steuereinheit zu dem Netzwerk oder Datenserver übertragen und dort für eine andere PLS bereitgestellt. Die Daten werden für eine Vielzahl von PLS durch den Datenserver bereitgestellt und bidirektional zwischen den verschiedenen PLS und dem Datenserver übertragen.

Die Internationale Veröffentlichte Patentanmeldung WO 93/01703 A2 beschreibt einen Mensch-Maschine-Kommunikationsbereich für Werkzeugmaschinen oder Robotersteuerungen. Dieses Dokument zeigt ein Objekt O mit einem Kommunikationsteii KT, einem Prozedurteil PT und einem Visualisierungsteil VT sowie Softwaremethoden und Prozeduren O₁ bis Oₙ des Objekts O. Weiterhin offenbart diese Druckschrift einzelne Objekte A, B, G, S mit ihren Methoden A₁ bis Aₙ und die Anbindung dieser Objekte an eine Mensch-Maschine-Schnittstelle NNC, mit einem Bildschirm BS und einer Eingabeeinheit Eₙ sowie an einen Steuerungskern CK, mit einem Antrieb ANT und einer Peripherie PER. Die Objekte und ihre Methoden sind dabei an Maschinensteuerungen angepasst.

Die deutsche Offenlegungsschrift DE 195 20 745 A1 beschreibt die Verwendung von verteilten Objektmanagerkomponenten zur Steuerung und Überwachung komplexer technischer Anlagen. Eine Vielzahl von Objektmanagerkomponenten sind dabei über eine Infrastruktur miteinander verbunden. Als Objektmanagerkomponenten werden dabei Datenverarbeitungsanlagen beliebiger Art verstanden. Objektmanagerkomponenten umfassen verschiedene Untereinheiten, wie eine Datenbank, eine Bedienerschnittstelle sowie Repräsentanten des Automatisierungssystems. Letztere können gleichzeitig in verschiedenen Objektmanagerkomponenten vorhanden sein. Neben Client-Schnittstellen, die als Schnittstellen zu Einheiten, welche gesteuert werden sollen, aufgefasst werden können, umfasst der Objektmanager einen Initialisierungsserver, einen Serverhauptteil sowie einen Serverübertragungsteil.

Die US-Patentschrift 5,689,415 schließlich betrifft ein Steuerungsverfahren in einem System mit zumindest einer programmierbaren Steuerung und beschreibt eine mit einer Datenbank im Steuerungssystem verbundene graphische Benutzeroberfläche.

Aufgabe der vorliegenden Erfindung ist es, ein Verfahren und eine Vorrichtung zur Steuerung zumindest einer Maschine in einem Fertigungssystem sowie ein Verfahren zur Erstellung der Steuerung bei geringem Erstellungsaufwand und unter Entlastung der Steuereinheit zu liefern.

Diese Aufgabe wird durch ein Steuerverfahren gemäß Anspruch 1 sowie eine Vorrichtung gemäß Anspruch 15 gelöst. Die Unteransprüche beschreiben bevorzugte Ausführungsformen der Erfindung.

Gemäß der Erfindung erfolgt das Steuern mittels einer Steuerungssoftware, die auf einem auf Maschinensteuerungen ausgerichteten objektorientierten Ansatz und einem entsprechenden Satz von Klassen (Framework) basiert. Weiterhin werden Daten von der Steuereinheit zu einem Datenserver übertragen und auf diesem bereitgestellt.

Die erfindungsgemäße Steuervorrichtung umfasst eine Steuereinheit, die ein Betriebssystem mit Echtzeitfähigkeit enthält, und eine Steuerungssoftware, die auf einem objektorientierten Ansatz und einem entsprechenden Satz von Klassen (Framework) basiert, wobei der objektorientierte Ansatz auf Maschinensteuerungen ausgerichtet ist. Ein Datenserver stellt die ihm von der Steuereinheit übertragenen Daten bereit.

Durch die erfindungsgemäße Vorrichtung und das erfindungsgemäße Verfahren werden die Daten für Anwendungen wie eine Darstellung der Daten bereitgestellt, und die Prozesse des Bereitstellens und des Steuerns voneinander entkoppelt. Der Aufwand zur Erstellung der Software und zur Anbindung an die Schnittstellen wird dabei durch die Verwendung eines einheitlichen Frameworks erheblich verringert.

Gemäß einer bevorzugten Ausgestaltung des Verfahrens erfolgt das Bereitstellen der Daten mittels einer Datenserversoftware, die zumindest teilweise auf dem Framework basiert. Somit kann auch der Erstellungsaufwand für die Datenserversoftware reduziert werden.

Gemäß einer weiteren bevorzugten Ausgestaltung des Verfahrens fordert ein aus den Klassen erzeugtes Objekt Daten von dem Datenserver an oder stellt sie diesem bereit, wodurch an dem Datenserver die Daten vorliegen ohne daß diese anzufordern sind oder bereits für eine Anwendung verwendet werden.

Bei einer vorteilhaften Ausgestaltung des Verfahrens werden die Daten zusammen mit Zusatzinformation am Datenserver bereitgestellt, wodurch beispielsweise ein Erstellen einer Darstellungssoftware unterstützt werden kann, wenn beispielsweise in den Daten eine Gruppe von Daten einer Maschine unter Angabe ihres Maschinentyps gekennzeichnet sind.

Besonders zweckmäßig ist es, den Datenserver gemäß einem Standard auszubilden, da die Daten dann auch für andere Anwendungen zur Verfügung stehen.

Bei einer vorteilhaften Ausgestaltung des Verfahrens werden die Daten zwischen der Steuereinheit und dem Datenserver bidirektional übertragen, wodurch Eingaben beispielsweise in einer Benutzerinteraktionseinheit als Steuersignale an die Steuereinheit gesendet werden können.

Erfindungsgemäß wird zur Bereitstellung einer flexiblen Steuervorrichtung mit einem Datenserver und einer programmierbaren Steuereinheit, die ein Betriebssystem mit Echtzeitfähigkeit enthält, und die zumindest eine Maschine eines Fertigungssystems steuert, ein Satz von objektorientierten Klassen (Framework) für einen objektorientierten Ansatz, der auf Maschinensteuerungen ausgerichtet ist, erstellt. Mittels des Framework wird eine Steuerungssoftware für die Steuereinheit erstellt. Zumindest teilweise mittels des Framework wird eine Datenserversoftware für den Datenserver erstellt. Durch dieses Verfahren wird eine optimierte und flexible Steuerungssoftware bereitgestellt.

Gemäß einer vorteilhaften Ausgestaltung des Verfahrens wird die Steuerungssoftware angepasst an die Aufgaben der Steuervorrichtung in dem Fertigungssystem erstellt, wodurch eine flexible Gestaltung der Steuerungssoftware bei geringem Erstellungsaufwand ermöglicht wird.

Bei einer weiteren vorteilhaften Ausgestaltung des Verfahrens wird die Steuerungssoftware auf einfache Weise durch graphische Programmierung erstellt.

Im folgenden werden bevorzugte Ausführungsformen der Erfindung anhand der angefügten Zeichnungen beschrieben. Die Zeichnungen zeigen im einzelnen:
- Fig. 1: eine schematische Darstellung eines Fertigungssystems mit einer erfindungsgemäßen Steuervorrichtung,
- Fig. 2: eine schematische Darstellung von Datenserver- und Steuerungssoftware und deren Anbindung an eine Darstellungssoftware,
- Fig. 3: eine Bildschirmdarstellung aus einem Tool zur Erstellung einer Steuerungssoftware, mit einem Klassendiagramm für ein Anwendungsbeispiel der Erfindung,
- Fig. 4: eine Bildschirmdarstellung für das Beispiel aus Fig. 3, mit einem Strukturdiagramm einer Klasse CPressEinheit
- Fig. 5: eine Bildschirmdarstellung für das Beispiel aus Fig. 3, mit einem Strukturdiagramm einer Klasse CMySystemMain,
- Fig. 6: eine Bildschirmdarstellung der Repräsentation eines OPC-Servers für das Beispiel aus Fig. 3,
- Fig. 7: eine Bildschirmdarstellung aus einem Tool zur Erstellung einer Darstellungssoftware für das Beispiel aus Fig. 3,
- Fig. 8: eine schematische Darstellung einer herkömmlichen Anbindung von Darstellungs- und Steuerungssoftware in einem Fertigungssystem,
- Fig. 9: eine schematische Darstellung einer herkömmlichen Steuerungsvorrichtung in einem Fertigungssystem.

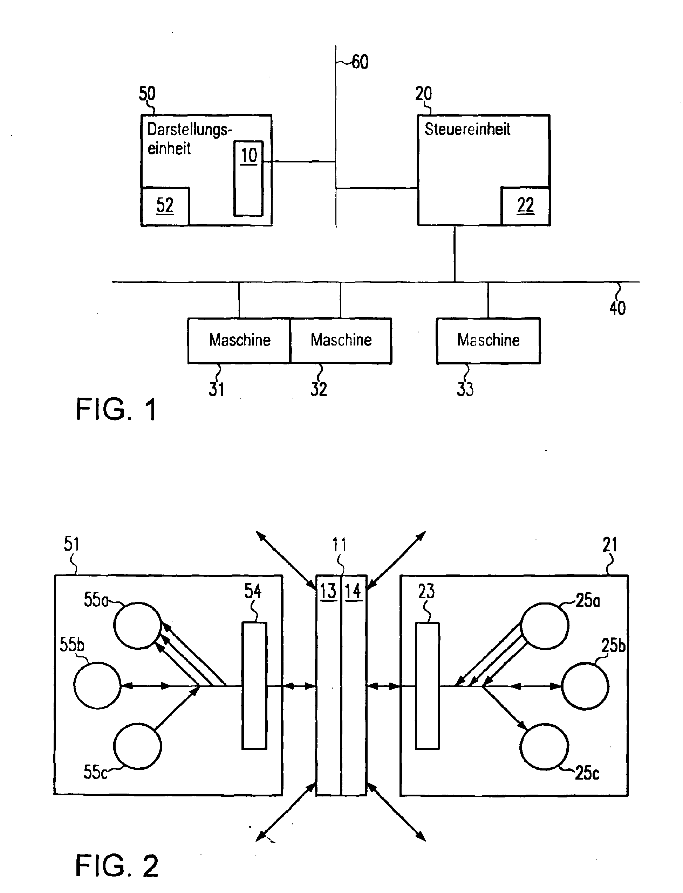

In Fig. 1 ist ein Fertigungssystem mit Maschinen 31, 32 und 33, einem ersten Datenbus 40 und einer Steuervorrichtung dargestellt, die eine programmierbare Steuereinheit 20 und einen Datenserver 10 umfasst. Um bei dem Beispiel der Darstellung zu bleiben, ist der Datenserver 10 in diesem Fall in einer Darstellungseinheit 50 angeordnet, die auch als Benutzerinteraktionseinheit bezeichnet werden kann. Die Darstellungseinheit 50 und die Steuereinheit 20 enthalten jeweils zumindest eine CPU 52, 22. Beide Einheiten sind über einen zweiten Datenbus 60 miteinander verbunden. Die Maschinen 31, 32 und 33 werden von der PC-basierten programmierbaren Steuereinheit 20 (PC-SPS) gesteuert, die hierfür ein Echtzeitbetriebssystem, beispielsweise VxWorks, und eine Steuerungssoftware verwendet. Dadurch kann auch für schnelle Fertigungsabläufe in den Maschinen 31 bis 33 ein Echtzeitverhalten gewährleistet werden.

Die Steuerungssoftware in der Steuereinheit 20 basiert auf einem objektorientierten Ansatz und einem entsprechenden Satz von Klassen (Framework), wobei der objektorientierte Ansatz und somit das Framework auf Maschinensteuerungen ausgerichtet ist. Eine Datenserversoftware in dem Datenserver 10 basiert zumindest teilweise auf dem gleichen Framework.

Von der Steuereinheit 20 werden Daten zum Datenserver 10 in der Darstellungseinheit 50 übertragen. Beispielsweise für eine Darstellung der Daten, die mittels einer Darstellungssoftware erfolgt, werden sie von dem Datenserver 10 bereitgestellt. Die Datenserversoftware speichert die Daten in einen Zwischenspeicher, um sie auf Anforderung an eine Anwendung wie die Darstellung zu übertragen. Die Darstellungseinheit 50 kann ein Computer sein, der neben seiner CPU 52 und einem Bildschirm, weitere Schnittstellen, Eingabeeinheiten, wie eine Tastatur oder eine Zeigereinheit, Verwaltungseinheiten, wie z.B. einen Speicher oder Ausgabeeinheiten, beispielsweise einen Drucker, umfassen kann.

Von der Steuerungssoftware werden die Daten selbsttätig, das heißt ohne Anforderung der Daten durch den Datenserver 10, zu diesem übertragen, um dann bei Anforderung der Daten durch eine Anwendung bereits verfügbar zu sein. Dafür ist das Framework so ausgebildet, dass ein erzeugtes Objekt der Klassen in der Steuerungssoftware die Daten zum Datenserver 10 selbsttätig überträgt oder von diesem anfordert .

Der Datenserver 10 wird nach einem einheitlichen Standard, beispielsweise dem Standard für Objektverknüpfung und -einbindung zur Prozesssteuerung (OPC) gestaltet. Somit werden die Daten in einem standardisierten Format für eine Vielzahl von Anwendungen verfügbar, ohne die Rechenkapazität der Steuereinheit zu belasten. Neben der Darstellung sind mögliche Anwendungsbeispiele: Protokollierung, statistische Auswertung und Verwendung in Komponenten einer unternehmensverwaltenden (ERP-) Software. Der Datenserver 10 kann die Daten auch über den Datenbus 60 verfügbar bereitstellen.

In bevorzugten Ausführungsformen wird bei Änderung der Daten der geänderte Wert von der Steuereinheit selbsttätig zu dem Datenserver übertragen. Im Regelfall wird der Datenserver 10 das Übertragen der Daten steuern und überwachen. Um weitere Rechenzeit in der Steuereinheit einzusparen kann der Datenserver 10 die Daten von der Steuereinheit 20 anfordern oder dieser bereitstellen. So kann das Anfordern in regelmäßigen zeitlichen Abständen, möglicherweise angepasst an Eigenschaften der Steuereinheit 20 erfolgen, während das Bereitstellen nur bei geänderten Daten am Datenserver erfolgt.

Neben den Daten von der Steuereinheit, die typischerweise Maschinen- oder Steuerdaten sind, können am Datenserver 10 Zusatzinformationen für die Daten bereitgestellt werden. Die Zusatzinformationen können beispielsweise mehrere Daten als Daten der Maschine 31 kennzeichnen, den Maschinentyp der Maschine 31, sowie Start- oder Sollwerte für die Daten umfassen.

Um das Steuern der Steuereinheit 20 auf der Darstellungseinheit 50 nicht nur zu überwachen, sondern auch zu verwalten, ist eine bidirektionale Übertragung von Daten zwischen Steuereinheit 20 und Darstellungseinheit 50 nötig. Eine Eingabe in der Darstellungs- oder Benutzerinteraktionseinheit 50 wird über den Datenserver 10 zur Steuereinheit 20 übertragen und kann das Steuern der Maschinen 31 bis 33 beeinflussen.

Bei dem Steuern der Maschinen 31 bis 33 werden von diesen zur Steuereinheit 20 Maschinendaten und umgekehrt zu den Maschinen 31 bis 33 Steuerdaten übertragen.

In Figur 2 ist für eine Ausführungsform der erfindungsgemäßen Steuervorrichtung schematisch eine Darstellungssoftware 51, eine Datenserversoftware 11 und eine Steuerungssoftware 21 dargestellt. Objekte 25a-c in der Steuerungssoftware 21 basieren auf dem Framework. Die Datenserversoftware 11 kann zumindest teilweise auf dem Framework basieren und umfasst in diesem Beispiel einen OPC-Server 13 und einen Steuerungs-Client 14. Die Objekte 25a, 25b der Steuerungssoftware 21 stellen ihre Ausgangsdaten an einem Steuerungs-Server 23 bereit, von dem die Daten zu dem Steuerungs-Client 14 übertragen werden. Die übertragenen Daten werden dann durch den OPC-Server 13 bereitgestellt.

Wie mit den beiden offenen von dem OPC-Server 13 weg zeigenden Pfeilen angedeutet, sind die Daten an dem OPC-Server 13 nicht nur für die Darstellungssoftware 51, sondern auch für beliebige andere Anwendungen verfügbar. Analog deuten die offenen Pfeile an dem Steuerungs-Client 14 an, dass dieser auch Daten anderer Steuereinheiten über deren Steuerungs-Server erhalten kann.

In der Darstellungssoftware 51 fordern Objekte 55a, 55b über einen OPC-Client 54 ihre Eingangsdaten vom OPC-Server 13 an, die daraufhin von dem OPC-Server 13 zu dem OPC-Client 54 übertragen werden und damit den Objekten 55a, 55b zur Verfügung stehen.

Zum einen kann ein Objekt 55b der Darstellungssoftware 51 nicht nur die Ausgangsdaten eines anderen Objektes, sondern eine Vielzahl von Daten beliebiger Objekte 25a, 25b 25c in der Steuerungssoftware 21 als Eingangsdaten verwenden. Zum anderen können in der Darstellungssoftware 51 Ausgangsdaten eines Objekts 55c über den OPC-Client 54 und den OPC-Server 13 zu einem Objekt 25c in der Steuerungssoftware 21 übertragen werden. Neben der Möglichkeit Daten auf Anforderung zu übertragen bietet beispielsweise der OPC-Standard auch die Möglichkeit einen OPC-Server so einzustellen, dass bereitgestellte Daten gleich zu einem OPC-Client übertragen werden. Über den Steuerungsclient 14 am OPC-Server 13 bereitgestellte Daten werden dann automatisch vom OPC-Server 13 zum OPC-Client 54 weitergeleitet, ohne dass es einer Anforderung derselben bedarf.

Weiterhin können anstelle der Daten in dem Zwischenspeicher des OPC-Server 13 auch die Adressen der Daten abgelegt werden. Der OPC-Client 54 und der Steuerungs-Server 23 können als Teil der Darstellungssoftware 51 und der Steuerungssoftware 21 oder als separate Software ausgebildet sein.

Sinnvollerweise wird eine Darstellungs- und eine Steuerungssoftware durch Um- oder Neuprogrammierung an die jeweilige Aufgabenstellung im Fertigungssystem angepasst. Auch diese verwaltenden Schritte können von der Darstellungseinheit 50 aus erfolgen.

Für eine Bereitstellung der Steuervorrichtung wird zunächst ein Framework erstellt, das auf Maschinensteuerungen ausgerichtet ist. Dazu werden marktübliche CASE-Tools beziehungsweise objektorientierte Methoden (UML, ROOM) verwendet. In diesem Fall kann mittels des Frameworks die Datenserversoftware und die Steuerungssoftware erstellt werden. Die Steuerungs- und die Darstellungssoftware werden dabei an die konkrete Aufgabe der Maschinen 31 bis 33 in dem Fertigungssystem angepasst.

Bei der Erstellung des Frameworks kann eine Vielzahl möglicherweise zu steuernder Maschinen berücksichtigt werden, um mit dem Framework möglichst viele Varianten von Fertigungssystemen abdecken zu können. Enthält das Framework bereits einen Anteil für die Darstellung von steuerungs- oder maschinenrelevanten Daten in der Datendarstellungseinheit 50, so kann die Darstellungssoftware ebenfalls auf dem Framework basierend erstellt werden.

Das Erstellen der Steuerungssoftware kann beispielsweise in der Darstellungseinheit 50 durch graphische Programmierung erfolgen. Auch die Darstellungssoftware kann durch graphische Programmierung beispielsweise in der Darstellungseinheit 50 erstellt werden. Dazu können bereits aus der Erstellung der Steuerungssoftware die Information über die zu steuernden Maschinen und somit auch die Auswahl der darstellbaren Daten des Fertigungssystems vorliegen.

Das Framework ist so auszubilden, dass ein erstelltes Objekt der Klassen bereits alle Informationen enthält, um den Datenserver 10 zu bedienen. Es ist also kein zusätzlicher Programmieraufwand oder keine Zuweisung von zusammengehörigen Ein- und Ausgangsdaten mehr nötig, damit die Daten am Datenserver 10 bereit stehen. Der Datenserver 10 stellt beispielsweise mittels der Zusatzinformationen eine Auswahl der Einheiten im Fertigungssystem zur Verfügung. Wird beispielsweise ein Motor bei der grafischen Programmierung der Darstellungssoftware aus dieser Auswahl gewählt, so sind somit sämtliche Ein- und Ausgangsdaten des Motors in der Darstellungssoftware bereits zugewiesen. Aus einer Programmierung der Schnittstellen wird abgesehen von möglichen manuellen Ergänzungen eine Konfigurationsarbeit.

Die konkrete Ausgestaltung des Fertigungssystems oder der Steuervorrichtung ist nicht an die beispielhafte Ausgestaltung in Fig. 1 gebunden. Die im folgenden angedeuteten Ausgestaltungsmöglichkeiten sind dabei auch miteinander kombinierbar.

So kann die Steuervorrichtung eine Vielzahl von Steuereinheiten umfassen, die mit dem zweiten Datenbus 60 verbunden sind und die Maschinen 31 bis 33 des Fertigungssystems steuern. Die Steuereinheit 20 oder die Vielzahl von Steuereinheiten kann auf unterschiedlicher Hardware oder Software basieren. Neben einer PC-SPS, also einer PC-basierten Hardware mit Echtzeitbetriebssystem, können als Steuereinheit ein PC analog zur Darstellungseinheit 50, beispielsweise mit dem Betriebssystem Windows NT und einer Software zur Echtzeiterweiterung, oder eine Workstation mit dem Betriebssystem UNIX mit Echtzeitfähigkeit verwendet werden.

Weiter kann die Steuereinheit 20 modular aufgebaut sein und aus miteinander verbundenen Untereinheiten bestehen. Die Verwendung einer Vielzahl von Datenbussen ist sinnvoll. Die Untereinheiten der Steuereinheit 20 können beispielsweise durch den Einsatz getrennter Bussysteme (FAST-Bus mit Lichtwellenleitern, CAN-Bus) für Verwaltung und Steuerung räumlich voneinander getrennt sein, ohne die Echtzeitfähigkeit zu verlieren.

Einzelne autarke Steuereinheiten können über Ethernet und TCP/IP in einem Intranet miteinander verbunden sein. Der zweite Datenbus 60 ermöglicht beispielsweise als firmeninternes Netz oder Intranet den Zugriff anderer Einheiten oder Firmenbereiche auf Daten des Fertigungssystems über den Datenserver 10. Weiterhin kann somit eine mobile Darstellungseinheit an einer beliebigen Stelle oder eine Vielzahl von Darstellungseinheiten mit dem zweiten Datenbus 60 verbunden werden. Die Steuereinheit 20 und der Datenserver 10 können auch direkt miteinander verbunden sein.

Die Maschinen 31 bis 33 im Fertigungssystem können einzeln, in Gruppen, von einer Steuereinheit oder von verschiedenen Steuereinheiten gesteuert werden, wobei letztere ihre Daten zu dem Datenserver 10 übertragen. Weiterhin können diese Steuereinheiten über die Darstellungseinheit 50 kontrollierbar und verwaltbar sein. Der Datenserver 10 kann bei einer entsprechenden Anordnung, beispielsweise Anbindung des Datenservers 10 an den ersten Datenbus 40, Maschinendaten auch direkt von den Maschinen erhalten.

Die Darstellungseinheit 50 kann neben dem Überwachen der dargestellten Daten für weitere Zwecke eingesetzt werden. In der Darstellungseinheit 50 kann der Fertigungsablauf und deren Steuerung protokolliert werden, das Steuern durch Eingaben gelenkt oder zwecks Fehlerkorrektur beeinflusst werden, das Programmieren der Darstellungs- und Steuerungssoftware oder des Frameworks mittels CASE-Tools erfolgen, die Darstellungs- und die Steuerungssoftware geladen werden, wobei letztere zur Steuereinheit übertragen werden kann. Weiterhin kann eine Fehlersuche oder ein schrittweise Abarbeiten der Steuerungssoftware (Debuggen) in der Steuereinheit, gesteuert über den Datenserver 10, 21, erfolgen. Schließlich kann in der Darstellungseinheit auch eine statistische Auswertung der dargestellten Daten, Maschinen- und Steuerdaten erfolgen.

Framework, Steuerungs- und Darstellungssoftware sind einzeln oder in Kombination miteinander auf einem Speichermedium abgelegt, das beispielsweise auch transportabel sein kann, um diese Software für eine Vielzahl von Steuervorrichtungen verfügbar zu machen.

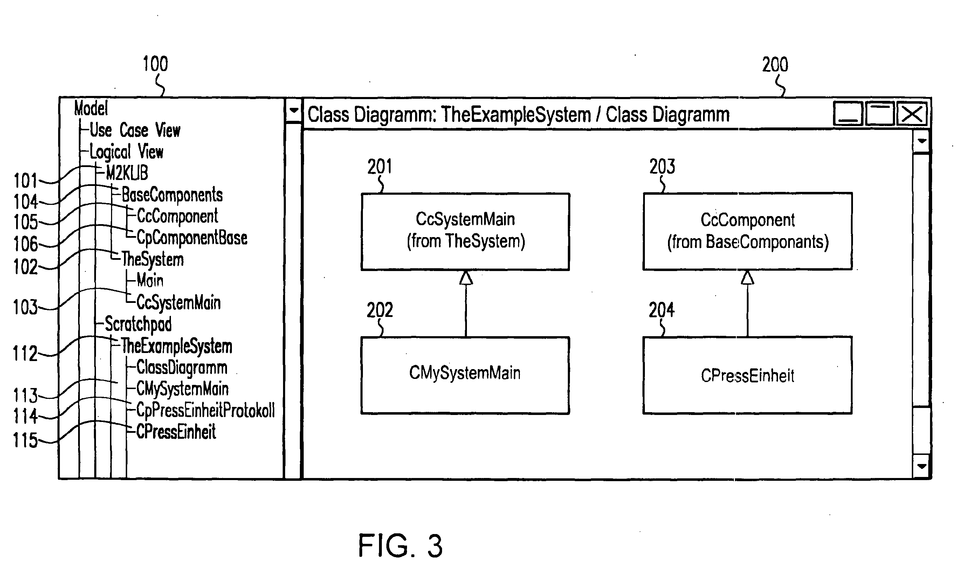

Im folgenden wird anhand der Figuren 3 bis 7 ein Anwendungsbeispiel für die Erfindung beschrieben. Gesteuert oder überwacht wird eine Maschine mit einem Vakuumsensor und einem Drucksensor, der den aktuellen Maschinenluftdruck misst. Entsprechend wird steuerungsseitig ein Vakuumwächter, der überwacht, ob Vakuumversorgung vorliegt oder nicht, und ein Druckwächter, der den aktuellen Wert des Maschinenluftdruckes überwacht, benötigt.

Zunächst wird eine Software für die Steuereinheit erstellt, die den Vakuum- und den Druckwächter realisiert. Angepasst an die Steuerungssoftware wird dann eine Software für die Darstellungseinheit erstellt, in der die Daten des Vakuum- und des Druckwächters angezeigt werden.

Fig. 3 zeigt die Oberfläche eines marktüblichen Softwareentwicklungstools, wie sie auf einem Bildschirm dargestellt wird. Das Fenster 100 zeigt eine strukturierte Ansicht für das Software-Projekt. Das Framework *M2KLib* 101 ist beispielsweise in Basiskomponenten 104 und Hauptsystem 102 mit zugehörigen Klassen 103 und 105 gegliedert. Die Darstellung im Bild 100 ist stark vereinfacht, um übersichtlich zu bleiben und den Aspekten dieses Beispiels zu genügen, zeigt also nicht alle vorhandenen Klassen und Inhalte des Frameworks.

Im Klassendiagramm 200 des Beispielsystems 112 sind die Klassen 202 und 204 in ihrer Abhängigkeit von den Klassen 201 und 203 dargestellt. Die Klasse *CMySystemMain* 202 ist eine Spezialisierung einer in dem Framework 101 bereitgestellten Klasse *CcSystemMain* 201. Als Spezialisierung der Klasse *CcComponent* 203 des Frameworks 101 ist die Klasse *CPressEinheit* 204 im Beispielsystem 112 neu angelegt worden. Die spezialisierte Klasse *CPressEinheit* 204 kann aber auch bereits als Teil des Frameworks 101, das eine Vielzahl möglicherweise zu steuernder Maschinen berücksichtigt, existieren.

Ein Objekt MySystemMain vom Typ *CMySystemMain* 202 repräsentiert bereits als Hülle das Gesamtsystem der Steuerungssoftware. Durch die Vererbung aller Eigenschaften der Klasse *CcSystemMain* 201 auf die Klasse *CMySystemMain* 202 ist sicher gestellt, dass alle für das System notwendigen Dienste vorhanden sind, beispielsweise Dateizugriffsdienste und der Dienst für die Anbindung von Darstellungseinheiten. Der Typ *CMySytemMain* 202 beschreibt zu diesem Zeitpunkt noch eine leere Systemhülle, die erst mit den für das System notwendigen Komponenten Vakuumwächter und Druckwächter gefüllt werden. Das Objekt *MySystemMain* vom Typ *CMySystemMain* 202 repräsentiert dann das vollständige Gesamtsystem mit der geforderten Funktionalität. Dieses Objekt wird erst zum Schluss beim Erstellen der auf der Steuereinheit lauffähigen Software erzeugt.

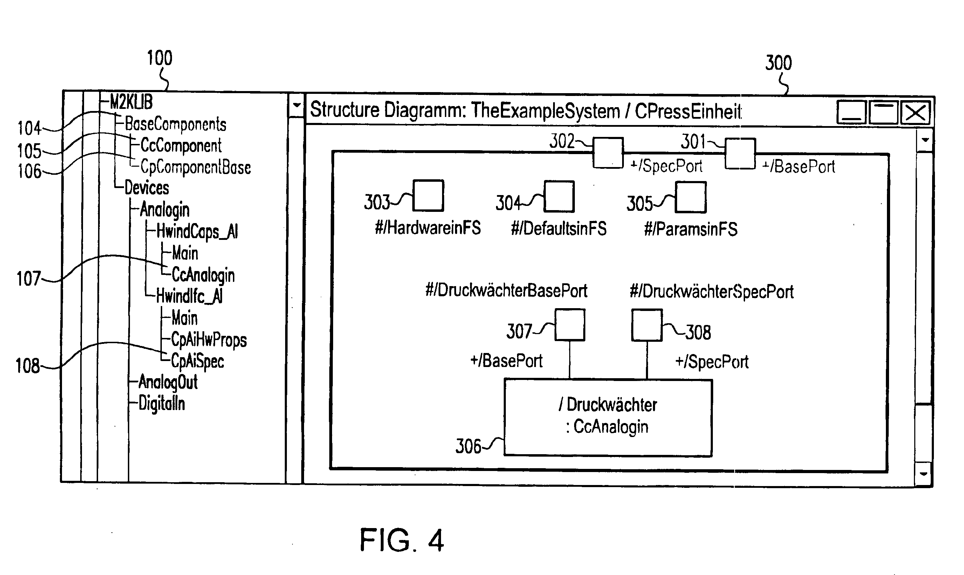

Fig. 4 zeigt neben dem Fenster 100 des Software-Projektes ein Strukturdiagramm 300 für die Klasse *CPressEinheit* in dem Beispielsystem. Der Druckwächter ist in der Hardware als analoger Eingang (AI) realisiert. Dadurch kann kontinuierlich die Information für den Wert des Maschinenluftdruckes erhalten werden. Aus der Klasse *CcAnalogln* 107 wird durch graphische Programmierung ein Objekt 306 angelegt und als Druckwächter bezeichnet. Jedes Objekt vom Typ der Klasse *CPressEinheit* enthält also einen Druckwächter.

In dem verwendeten System umfasst jede Komponente zwei Schnittstellen (Ports), die jeweils ein Kommunikationsprotokoll für die Kommunikation der Komponente mit seiner Hülle festlegen, beispielsweise der Druckwächter 306 mit seiner Klasse *CPressEinheit.* Die sogenannten BasePorts bzw. dessen Protokoll CpComponentBase ist für alle Typen von Komponenten identisch. Mittels des BasePort kann die Hülle seine Komponente starten und wieder beenden. Die SpecPorts dagegen sind speziell für jeden Typ von Komponente vorhanden. Über SpecPorts kann die Hülle spezielle Daten mit der Komponente austauschen.

Für den Druckwächter 306, als Analogem Input, ist das Protokoll *CpAiSpec* 108 für seinen SpecPort 308 definiert. Die Eingangs- und Ausgangsschnittstellen 301 bis 305 sind Teile der Grundfunktionalität, die die Klasse *CPressEinheit* von der Klasse *CcComponent* geerbt hat.

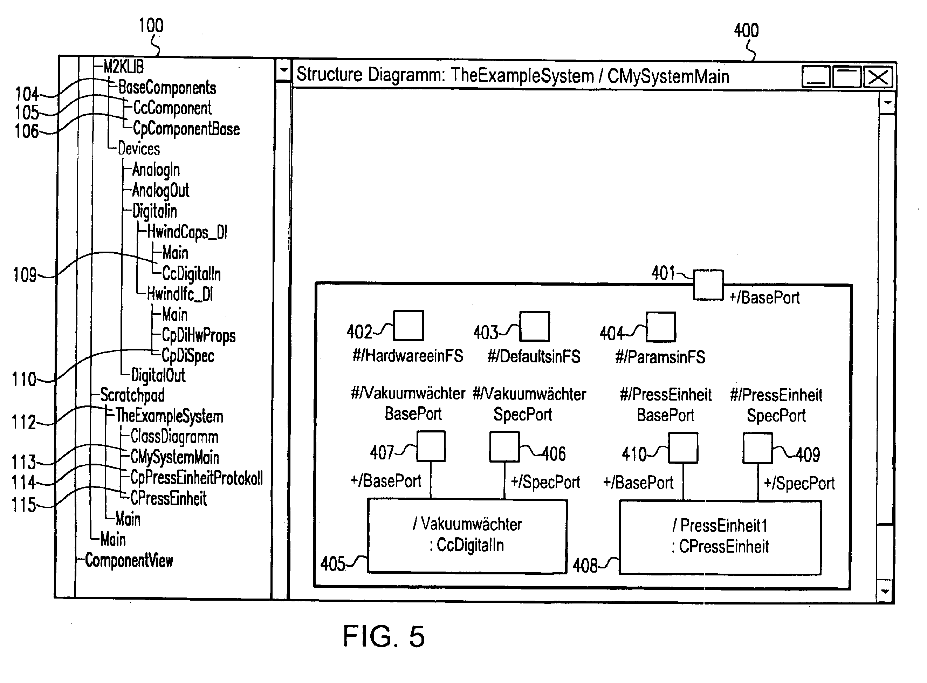

Fig. 5 zeigt ein Strukturdiagramm 400 der Klasse *CMySystemMain.* Mittels graphischer Programmierung, also durch Ziehen der Klasse *CcDigitalln* aus der strukturieren Ansicht 100 in das Strukturdiagramm 400 wird ein Objekt 405 der Klasse angelegt. Das Objekt 405 erhält den Namen Vakuumwächter. Das Objekt PressEinheit1 408 wird analog aus der Klasse *CPressEinheit* 115 angelegt. Die Objekte sind eindeutig durch ihre Namen und den Namen ihrer Systemhülle gekennzeichnet: MySystemMain_Vakuumwächter und MySystemMain_PressEinheit1. Der jetzt in CMySystemMain angelegte Druckwächter kann eindeutig identifiziert werden anhand seines Namens, den Namen der Systemhülle und den Namen seiner Baugruppe: MySystemMain_PressEinheit1_Druckwächter. Die BasePorts 407 und 410 entsprechen wiederum dem Protokoll *CpComponentBase* 106, während die SpecPorts 406 und 409 den Protokollen *CpDiSpec* 110 und *CpPressEinheitProtokoll* 114 entsprechen. Ein- und Ausgangsschnittstellen 401 bis 404 der Klasse *CMySystemMain* wurden wiederum automatisch als Teil der vererbten Grundfunktionalität erstellt.

Aus dieser Systemmodellierung wird nun mit Hilfe des verwendeten Entwicklungstools eine Software für die Steuereinheit erstellt. Voraussetzung für das Funktionieren mit physischer Hardware ist eine Beschreibungsliste für die Hardware, in der eingetragen ist, unter welcher Adresse der Vakuumwächter und der Druckwächter ihre Hardwareressourcen finden. Alternativ ist ein Ansatz ohne Hardwarebeschreibungsliste denkbar, wenn die Objekte die Adressen direkt bei den Maschinen anfordern können.

Nach dem Starten der Software in der Steuereinheit melden die Objekte des Vakuumwächters und des Druckwächters sich selbständig bei einem Dienst (Datenserver) an, der die Visualisierung unterstützt. Für eine zu erstellende Darstellungssoftware können bei diesem Dienst Informationen über die angemeldeten Objekte und deren Daten erhalten werden. In diesem Beispiel ist der Dienst ein OPC-Server.

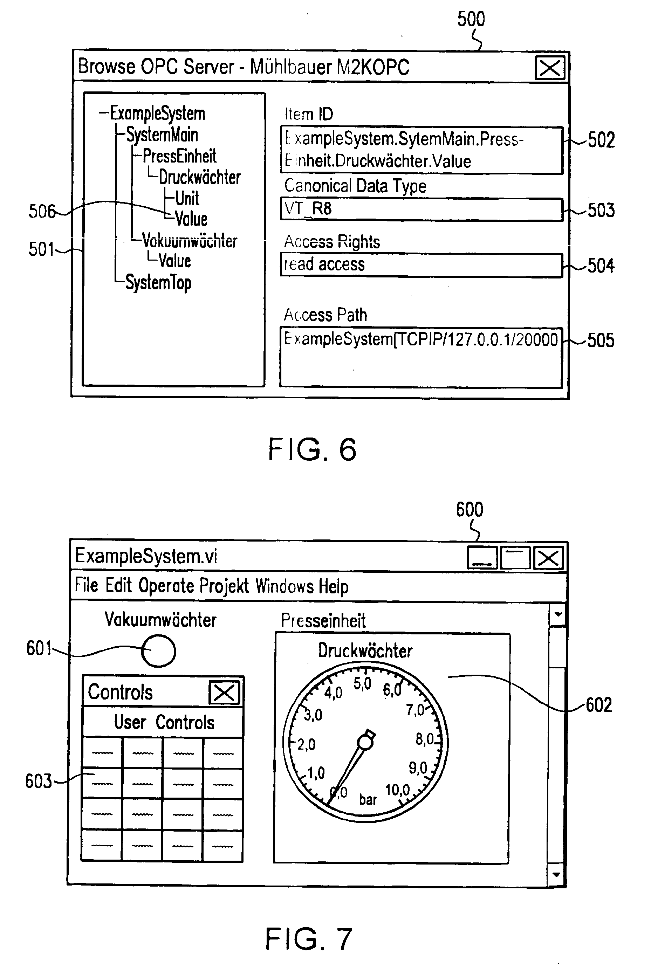

Fig. 6 zeigt eine Bildschirmdarstellung 500 eines OPC-Servers mit einer strukturierten Ansicht 501 der im Beispielsystem verfügbaren Daten und Detailinformationen 502 bis 505 für einen aus der strukturierten Ansicht 501 ausgewählten Wert. Ein Tool zur Erstellung der Darstellungssoftware kann die am OPC-Server bereitgestellten Daten über seinen OPC-Client lesen.

Fig. 7 zeigt eine Bildschirmdarstellung 600 einer Oberfläche des Entwicklungstools für die Darstellungssoftware. Das Entwicklungstool stellt eine Auswahl 603 von Darstellungsmöglichkeiten für unterschiedliche Daten bereit. Eine Kontrollleuchte wird aus der Auswahl 603 selektiert und beispielsweise mittels graphischer Programmierung als Objekt 601 angelegt. Das Entwicklungstool stellt nun beispielsweise für eine manuelle Auswahl eine Liste, der für eine Kontrolllampe möglichen Daten aus den vom OPC-Server angebotenen Daten, bereit. Aus der Liste wird das Datenelement Vakuumwächter gewählt. Ist dagegen in der Auswahl 603 bereits eine Darstellungsmöglichkeit für einen Vakuumwächter vorgesehen, so kann die Zuordnung der Daten vom OPC-Server zum Objekt 601 automatisch erfolgen, da in dem Beispiel nur ein Vakuumwächter definiert wurde. Für den Druckwächter gibt es bereits ein Anzeigeobjekt in der Auswahl, die auf einem Framework für die Darstellungseinheit beruht. Ein Objekt Druckwächter wird angelegt und kann analog zum Vakuumwächter automatisch mit den Daten des OPC-Servers für den Druckwächter in der Steuerungseinheit verbunden werden.

## Patentansprüche

1. Verfahren in einer Steuervorrichtung mit einer programmierbaren Steuereinheit (20), zur Steuerung in einem Fertigungssystem mit folgenden Schritten:
Steuern zumindest einer Maschine (31, 32, 33) in dem Fertigungssystem mittels der Steuereinheit (20);
Bereitstellen von Daten von der Steuereinheit (20);
Übertragen der Daten von der Steuereinheit (20) zu einem Datenserver (10);
**dadurch gekennzeichnet,**
**dass** die Steuereinheit (20) ein Betriebssystem mit Echtzeitfähigkeit umfasst,
sowie **dadurch**, dass das Bereitstellen der Daten auf dem Datenserver (10) erfolgt;
**dass** das Steuern in der Steuereinheit (20) mittels einer Steuerungssoftware (21) erfolgt, die auf einem auf Maschinensteuerungen ausgerichteten objektorientierten Ansatz und einem entsprechenden Satz von Klassen basiert, und
**dass** das Bereitstellen der Daten mittels einer Datenserver-Software (11) erfolgt, die auf dem Satz von Klassen basiert.

2. Verfahren nach Anspruch 1, **dadurch gekennzeichnet, dass** ein aus den Klassen erzeugtes Objekt (25a, 25b) die Daten von dem Datenserver (10) anfordert oder diesem bereitstellt.

3. Verfahren nach Anspruch 1 oder 2, **dadurch gekennzeichnet, dass** die Daten zusammen mit Zusatzinformation an dem Datenserver (10) bereitgestellt werden.

4. Verfahren nach einem der Ansprüche 1 bis 3, **dadurch gekennzeichnet, dass** die Daten gemäß einem Standard bereitgestellt werden.

5. Verfahren nach einem der Ansprüche 1 bis 4, **dadurch gekennzeichnet, dass** die Daten von einer Vielzahl von Steuereinheiten an dem Datenserver (10) bereitgestellt werden.

6. Verfahren nach einem der Ansprüche 1 bis 5, **dadurch gekennzeichnet, dass** die Daten für eine Vielzahl von Anwendungen an dem Datenserver (10) bereitgestellt werden.

7. Verfahren nach einem der Ansprüche 1 bis 6, **dadurch gekennzeichnet, dass** die Daten zwischen der Steuereinheit (20) und dem Datenserver (10) bidirektional übertragen werden.

8. Verfahren nach einem der Ansprüche 1 bis 7, **dadurch gekennzeichnet, dass** die Steuerungssoftware (21) angepasst an eine Aufgabe der Steuerung in dem Fertigungssystem erstellt wird.

9. Verfahren nach einem der Ansprüche 1 bis 8, **dadurch gekennzeichnet, dass** die Steuerungssoftware (21) an die Maschine (31, 32, 33) oder deren Aufgabe angepasst ist.

10. Verfahren nach einem der Ansprüche 1 bis 9, **dadurch gekennzeichnet, dass** der Satz von Klassen so erstellt wird, dass neben den Daten auch Zusatzinformation bereitgestellt wird, die ein Erstellen einer Interaktionssoftware (51) in einer Benutzerinteraktionseinheit (50) unterstützt.

11. Verfahren nach Anspruch 10, **dadurch gekennzeichnet, dass** die Interaktionssoftware (51) durch grafische Programmierung erstellt wird.

12. Verfahren nach einem der Ansprüche 1 bis 11, **dadurch gekennzeichnet, dass** die Steuerungssoftware (21) durch grafische Programmierung erstellt wird.

13. Verfahren nach einem der Ansprüche 1 bis 12, **dadurch gekennzeichnet, dass** ein aus dem Satz von Klassen erstelltes Objekt bereits alle Informationen enthält, um ein- oder ausgehende Daten mit dem Datenserver (10) auszutauschen.

14. Speichermedium enthaltend ein Computerprogramm oder eine Befehlssequenz, die ein Verfahren nach einem der Ansprüche 1 bis 13 realisiert.

15. Steuervorrichtung, die zumindest eine Maschine (31, 32, 33) eines Fertigungssystems steuert, mit:
einer programmierbaren Steuereinheit (20), die eine erste CPU (22) umfasst; und
einem Datenserver (10), der Daten von der Steuereinheit (20) bereitstellt;
**dadurch gekennzeichnet, dass**
die Steuereinheit (20) ein Betriebssystem mit Echtzeitfähigkeit umfasst;
eine Steuerungssoftware (21) in der Steuereinheit (20) auf einem objektorientierten Ansatz und einem entsprechenden Satz von Klassen (Framework) basiert, wobei der objektorientierte Ansatz auf Maschinensteuerungen ausgerichtet ist,
bereitzustellende Daten von der Steuereinheit (20) zum Datenserver (10) übertragen werden und
eine Datenserver-Software (11) des Datenservers (10) auf dem Satz von Klassen basiert.

16. Vorrichtung nach Anspruch 15, **dadurch gekennzeichnet, dass** der Datenserver (10) die Daten gemäß einem Standard bereitstellt.

17. Vorrichtung nach Anspruch 15 oder 16, **dadurch gekennzeichnet, dass** der Datenserver (10) für eine bidirektionale Übertragung von Daten geeignet ist.

## Claims

1. A method in a control device with a programmable control unit (20), for control in a production system having the following steps:
controlling at least one machine (31,32,33) in the production system by means of the control unit (20);
making available data from the control unit (20);
transmitting the data from the control unit (20) to a data server (10);
**characterised in that**
the control unit (20) comprises an operating system with real-time capability,
and **in that** the making-available of data takes place on the data server;
**in that** the control in the control unit (20) is effected by means of control software (21) which is based on an object-orientated batch aligned with machine control systems and on a corresponding set of classes, and
**in that** the making-available of data is effected by means of data server software (11) which is based on the set of classes.

2. A method according to Claim 1, **characterised in that** an object (25a,25b) created from the classes requests the data from the data server (10) or makes the latter available.

3. A method according to Claim 1 or 2, **characterised in that** the data is made available together with additional information to the data server (10).

4. A method according to any one of Claims 1 to 3, **characterised in that** the data is made available in accordance with a standard.

5. A method according to any one of Claims 1 to 4, **characterised in that** the data is made available at the data server (10) by a plurality of control units.

6. A method according to any one of Claims 1 to 5, **characterised in that** the data for a plurality of applications is made available at the data server (10).

7. A method according to any one of Claims 1 to 6, **characterised in that** the data is transmitted bidirectionally between the control unit (20) and the data server (10).

8. A method according to any one Claims 1 to 7, **characterised in that** the control software (21) is created in adaptation to a task of the control system in the production system.

9. A method according to any one of Claims 1 to 8, **characterised in that** the control software (21) is adapted to the machine (31,32,33) or its task.

10. A method according to any one of Claims 1 to 9, **characterised in that** the set of classes is created so that, in addition to the data, additional information is also made available, which assists creation of interaction software (51) in a user interaction unit (50).

11. A method according to Claim 10, **characterised in that** the interaction software (51) is created by graphic programming.

12. A method according to any one of Claims 1 to 11, **characterised in that** the control software (21) is created by graphic programming.

13. A method according to any one of Claims 1 to 12, **characterised in that** an object created from the set of classes already contains all the information to exchange incoming or outgoing data with the data server (10).

14. A storage medium containing a computer program or a command sequent, which implements a method according to any one of Claims 1 to 13.

15. A control device which controls at least one machine (31,32,33) of a production system, with
a programmable control unit (20) which comprises a first CPU (22), and
a data server (10) which makes available data from the control unit (20);
**characterised in that**
the control unit (20) comprises an operating system with real-time capability;
a control software (21) in the control unit (20) based on an object-orientated batch and on a corresponding set of classes (framework), wherein the object-orientated batch is aligned with machine control systems,
data to be made available is transmitted from the control unit (20) to the data server (10) and
a data server software (11) of the data server (10) is based on the set of classes.

16. A device according to Claim 15, **characterised in that** the data server (10) makes the data available in accordance with a standard.

17. A device according to Claim 15 or 16, **characterised in that** the data server (10) is suitable for bidirectional data transmission.

## Revendications

1. Procédé dans un dispositif de commande équipé d'une unité de commande programmable (20), pour la commande dans un système de fabrication, ledit procédé comportant les étapes suivantes :
commande d'au moins une machine (31, 32, 33) dans le système de fabrication au moyen de l'unité de commande (20),
mise à disposition de données par l'unité de commande (20) ;
transmission des données depuis l'unité de commande (20) à un serveur de données (10) ;
**caractérisé en ce que**
l'unité de commande (20) comprend un système d'exploitation avec aptitude au temps réel,
ainsi qu'en ce que les données sont mises à disposition sur le serveur de données (10) ;
**en ce que** la commande dans l'unité de commande (20) s'effectue au moyen d'un logiciel de commande (21) qui s'appuie sur une approche orientée objet et orientée vers les commandes de machine, et sur un ensemble correspondant de classes, et
**en ce que** les données sont mises à disposition au moyen d'un logiciel de serveur de données (11), lequel s'appuie sur l'ensemble de classes.

2. Procédé selon la revendication 1, **caractérisé en ce que** un objet (25a, 25b) créé à partir des classes demande les données au serveur de données (10) ou les lui met à disposition.

3. Procédé selon la revendication 1 ou 2, **caractérisé en ce que** les données sont mises, conjointement avec une information supplémentaire, à la disposition du serveur de données (10).

4. Procédé selon l'une quelconque des revendications 1 à 3, **caractérisé en ce que** les données sont mises à disposition selon un standard.

5. Procédé selon l'une quelconque des revendications 1 à 4, **caractérisé en ce que** les données sont mises à la disposition du serveur de données (10) par une pluralité d'unités de commande.

6. Procédé selon l'une quelconque des revendications 1 à 5, **caractérisé en ce que** les données sont mises à la disposition du serveur de données (10) pour une pluralité d'applications.

7. Procédé selon l'une quelconque des revendications 1 à 6, **caractérisé en ce que** les données sont transmises de manière bidirectionnelle entre l'unité de commande (20) et le serveur de données (10).

8. Procédé selon l'une des revendications 1 à 7, **caractérisé en ce que** le logiciel de commande (21) est élaboré de manière adaptée à une tâche de la commande dans le système de fabrication.

9. Procédé selon l'une quelconque des revendications 1 à 8, **caractérisé en ce que** le logiciel de commande (21) est adapté à la machine (31, 32, 33) ou à la fonction de celle-ci.

10. Procédé selon l'une quelconque des revendications 1 à 9, **caractérisé en ce que** l'ensemble de classes est établi de telle manière qu'outre les données, une information supplémentaire est également mise à disposition, laquelle soutient un établissement d'un logiciel d'interaction (51) dans une unité d'interaction utilisateur (50).

11. Procédé selon la revendication 10, **caractérisé en ce que** le logiciel d'interaction (51) est établi par programmation graphique.

12. Procédé selon l'une quelconque des revendications 1 à 11, **caractérisé en ce que** le logiciel de commande (21) est établi par programmation graphique.

13. Procédé selon l'une quelconque des revendications 1 à 12, **caractérisé en ce qu'**un objet créé à partir de l'ensemble de classes contient déjà toutes les informations pour échanger des données entrantes ou sortantes avec le serveur de données (10).

14. Support de stockage comprenant un programme d'ordinateur ou une séquence d'instructions qui met en oeuvre un procédé selon l'une quelconque des revendications 1 à 13.

15. Dispositif de commande commandant au moins une machine (31, 32, 33) d'un système de fabrication, comprenant :
une unité de commande programmable (20) qui comprend une première unité centrale (22) ; et
un serveur de données (10) qui met à disposition des données de l'unité de commande (20);
**caractérisé en ce que**
l'unité de commande (20) comprend un système d'exploitation avec aptitude au temps réel ;
un logiciel de commande (21) dans l'unité de commande (20) s'appuie sur une approche orientée objet et sur un ensemble correspondant de classes (framework), l'approche orientée objet étant orientée vers des commandes de machine,
les données à mettre à disposition étant transmises depuis l'unité de commande (20) au serveur de données (10) et
un logiciel de serveur de données (11) du serveur de données (10) s'appuyant sur l'ensemble de classes.

16. Dispositif selon la revendication 15, **caractérisé en ce que** le serveur de données (10) met les données à disposition selon un standard.

17. Dispositif selon la revendication 15 ou 16, **caractérisé en ce que** le serveur de données (10) est approprié pour une transmission bidirectionnelle des données.
